Europäisches Patentamt

European Patent Office

Office européen des brevets

(19)

(11) Veröffentlichungsnummer: **0 134 819**

**A1**

(12) **EUROPÄISCHE PATENTANMELDUNG**

(21) Anmeldenummer: **81109672.6**

(22) Anmeldetag: **01.08.78**

(51) Int. Cl.⁴: **B 25 J 15/02**

(43) Veröffentlichungstag der Anmeldung:
**27.03.85 Patentblatt 85/13**

(84) Benannte Vertragsstaaten:
**BE CH DE FR GB NL SE**

(60) Veröffentlichungsnummer der früheren
Anmeldung nach Art. 76 EPÜ: **0 000 877**

(71) Anmelder: **Grisebach, Hans-Theodor**
**Kampstrasse 7**
**D-4750 Unna(DE)**

(72) Erfinder: **Betzing, Rudolf**
**Vogelherd 3**
**D-5000 Hagen(DE)**

(72) Erfinder: **Grisebach, Hans Theodor**
**Kampstrasse 7**
**D-4750 Unna(DE)**

(74) Vertreter: **Patentanwälte Zellentin**
**Zweibrückenstrasse 15**
**D-8000 München 2(DE)**

(54) **Spannzange mit elektromotorischem Spannantrieb.**

(57) Bei einer Spannzange (1) ist ein elektromotorischer Spannantrieb (2) vorgesehen, der die Spindel (3) oder die Mutter (4) eines Schraubengetriebes (5) zur Erzeugung einer axialen Spannbewegung über einen Elektromotor (6) drehend antreibt und die erzeugte Axialbewegung durch ein Hebelgetriebe (7) in Bewegungen von Spannbacken (8) rechtwinkelig dazu umwandelt.

Um einen narrensicheren Spannvorgang zu gewährleisten, der auch Formänderungen des Werkstückes berücksichtigt, sind zwischen dem die Axialkräfte übertragenden Teil (Stößel 9) des Schraubengetriebes (5) und dem Hebelgetriebe (7) mehrere einander entgegengerichtet vorgespannte, auch als Dämpfung dienende, Kraftspeicher (10) eingeschaltet.

Fig. 1

0134819

- 1 -

Europäische Patentanmeldung
des
Hans-Theodor-Grisebach, Kampstr. 7, 4750 Unna

## Spannzange mit elektromotorischem Spannantrieb

Die Erfindung bezieht sich auf Spannzangen mit elektromotorischem Spannantrieb, bei der die Spindel oder Mutter eines Schraubengetriebes zur Erzeugung einer axialen Spannbewegung über einen Elektromotor drehend angetrieben ist und die so erzeugte Axialbewegung durch ein Hebelgetriebe in Bewegungen von Spannbacken rechtwinkelig dazu umgewandelt wird. Eine Spannzange dieser Art ist aus der US-A-3,247,978 bekannt. Bei dieser wird ein mit dem Hebelgetriebe für die Spannbacken verbundenes Anschlußteil von einer Schraubenspindel axial verschoben, die von einer Mutter umgeben ist. Diese Mutter wird über einen Elektromotor drehend angetrieben. Das Schraubengetriebe ist selbsthemmend wobei die Selbsthemmung für die Aufrechterhaltung der

Spannbackenposition nach Abschalten des Motors sorgen muß. Derartige Spannantriebe bieten keine zuverlässige Gewähr für einen narrensicheren Spannvorgang, die großen rotatorischen Massen, die beim Anlegen der Backen an das Werkstück plötzlich abgebremst werden, erzeugen schwer kontrollierbare Spannkräfte, die insbesondere bei empfindlichen Werkstücken zu hoch werden können. Eine feinfühlige Regulierung ist mit solchen Ausführungsarten kaum zu erreichen. Auch ist der Aufbau nicht besonders einfach.

Hier will die Erfindung durch Vereinfachung des konstruktiven Aufbaus und durch Schaffung einer absolut unfallsicheren Spannmöglichkeit des Werkstückes sowie durch die Ermöglichung einer Feinregulierung der Spannkraft, Abhilfe schaffen. Dies wird durch die Erfindung, wie sie in den Ansprüchen gekennzeichnet ist, gelöst. Durch die Einschaltung mehrerer einander entgegengerichtet vorgespannter, auch als Dämpfung dienender Kraftspeicher, zwischen dem die Axialkräfte übertragen Teil, beispielsweise dem Stößel des Schraubengetriebes und dem Hebelgetriebe, das die Spannbacken trägt, steht stets eine Art Reservespannweg zur Verfügung, der die Spannkraft auch dann noch voll erhält, wenn durch die Durchmesserveränderung des Werkstückes, sich der Abstand zwischen den Spannbacken verändert.

Durch weitere Merkmale der Ansprüche wird eine Feinregulierung der Spannkraft einerseits durch die Regulierung des Motorstromes und andererseits durch die Erfassung der Spannwege des Kraftspeichers, deren sensorische Auswertung und Weitergabe als Regelimpuls erreicht.

Eine vorteilhafte Anordnung der Spannzangen als Doppelzange ist besonders für die Bedienung von Werkzeugmaschinen bei gleichzeitiger Handhabung von Roh- und Fertigwerkstücken von Vorteil. Eine solche Spannzange

**0134819**

ist aus der US-A-4,015,721 bekannt. Jedoch ist die gleichgerichtete Anordnung der Spannzangen an einem schwenkbaren
Träger nicht für alle Einsatzfälle geeignet und zu raumaufwendig. Auch lassen sich die Spannrichtungen nicht beliebig einstellen. Hier schafft die Erfindung durch eine
entgegengesetzt gerichtete überlappende Anordnung der
Spannantriebe Abhilfe.

Mit einem Verfahren nach der Erfindung läßt sich auch bei
durchaus unterschiedlichen konstruktiven Aufbau der jeweiligen Spannzange eine bisher nicht bekannte Sicherheit in
der Handhabung von Werkstücken erreichen, obwohl als Schraubengetriebe Kugelspindeln mit Kugelumlaufmutter Verwendung
finden, die bekanntlich nicht selbsthemmend sind, so daß
die Festlegung des Spannvorganges über eine Bremse erfolgen
muß. Die Bremse fällt vor dem Nachlassen des Motordrehmomentes ein und sichert daher absolut zuverlässig den
Spannvorgang.

Die Zeichnungen zeigen mit

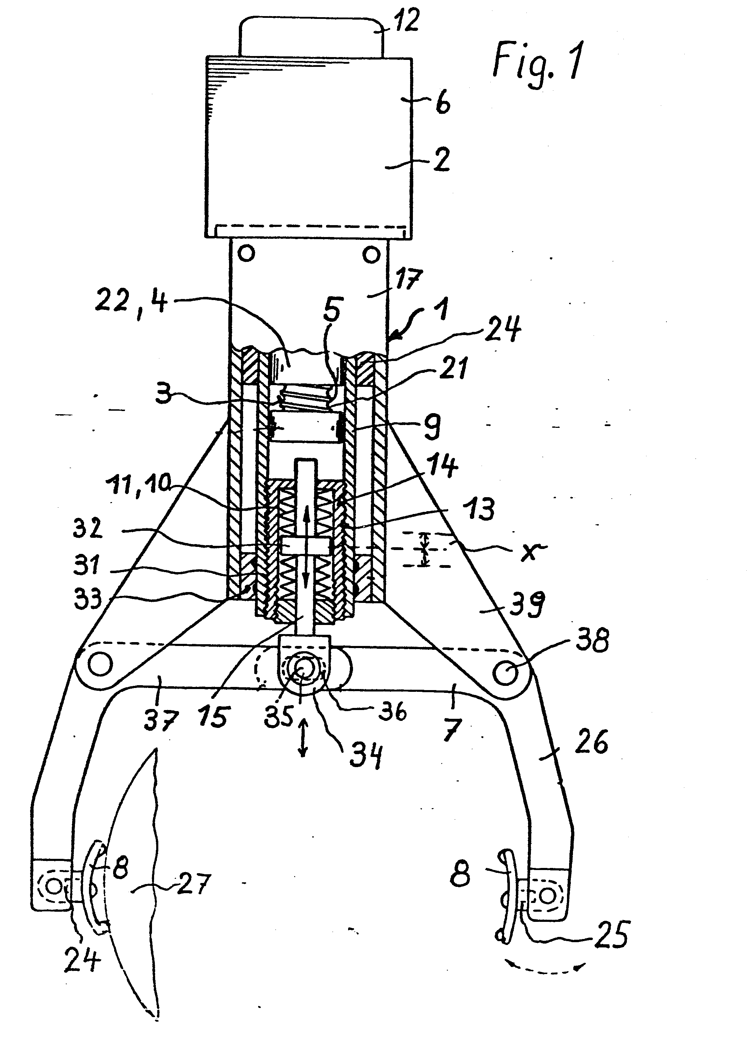

Figur 1 eine Spannzange mit Kugelschraubenumlaufgetriebe,

Figur 2 eine Doppelspannzange,

Figur 3 eine Zange mit veränderbarer Schließrichtung der
Spannbacken,

Figur 4 eine Dreibackenzange.

Eine Spannzange 1 ist mit einem Spannantrieb 2 versehen,
der eine Spindel 3, die als Kugelspindel 21 ausgebildet
ist, und eine Mutter 4, die als Kugelumlaufmutter 22 ausgebildet ist, aufweist. Diese Teile bilden das Schraubengetriebe 5, das von einem Elektromotor 6 angetrieben ist,
wobei in dem dargestellten Ausführungsbeispiel die Kugelspindel 21 von dem Elektromotor 6 angetrieben und die
Kugelumlaufmutter 22 mit dem Stößel 9 verbunden ist, der
seinerseits über eine Rotationsdämpfung 23 verdrehungssicher gegenüber dem Vierkantrohr 17 axial geführt ist.
Dieser Stößel 9 nimmt an seinem Ende 13 eine Baueinheit
14 auf, die über das Gewinde 31 in den als kreisrundes
Rohr ausgebildeten Stößel 9 einschraubbar ist. Innerhalb
dieser Baueinheit 14 sind als Kraftspeicher 10 Tellerfederpakete 11 untergebracht, die gegeneinander vorgespannt,
beispielsweise auf einen Ringflansch 32 eines Anschlußteiles 15 wirken, derart, daß dieses in beiden axialen
Bewegungsrichtungen Spannwege X ausführen kann. Der Stößel
9 kann mittelbar oder unmittelbar von der als Gleitstein
dienenden Rotationsdämpfung 23 in dem Vierkantrohr 17
geführt sein. Ein Deckelteil 33 schließt das Vierkantrohr 17 stirnseitig ab und bildet die Führung des
als kreisrundes Rohr ausgebildeten Stößels 9. Das Anschlußteil 15 trägt eine Gelenkgabel 34, deren Achse 35
die Langlöcher 36 der sich überlappenden Schenkel 37 des
Hebelgetriebes 7 durchfaßt. Diese sind über die Gelenke 38

an Auslegerarmen 39 gelagert, die an dem Vierkantrohr 17 angeschweißt sind. Die Spannbackenhebel 26 tragen die Spannbacken 8, die über Haltezapfen 24 in Kugellagern 25 gelagert sind und einerseits Werkstücke 27 von innen oder nach Umstecken oder Umschwenken von außen erfassen.

Unter dem Andruck der Spannbacken 8 verändern Werkstücke häufig elastisch oder ggf. auch plastisch ihre Form. Durch die Kraftspeicher 10, Tellerfederpakete 11, kann diese Formänderung nicht zu einem Nachlassen der Spannkraft führen und somit ist eine einwandfreie kraftschlüssige und narrensichere Erfassung von Werkstücken möglich.

Am Anschlußteil 15 kann sich ein gegenüber dem Stößel 9 (Stößelende 13, Baueinheit 14) von dem Drehmoment des Elektromotors 6 abhängiger Spannweg X ergeben und zwar gleichgültig, ob der Stößel 9 geschoben oder gezogen wird. Dieser Spannweg X kann über entsprechende Sensoren meßtechnisch erfaßt und mit vorgegebenen Wert verglichen und sodann als Regelimpuls zur Regelung des Drehmomentes des Elektromotors 6 verwendet werden. Die Spannkraft läßt sich daher auch über einen vorbestimmten Spannweg X einstellen. Dies ist beispielsweise dann zweckmäßig, wenn bestimmte Verformungswege nicht überschritten werden dürfen.

Auf die nicht dargestellte Läuferwelle des Elektromotors 6 bzw. auf die Kugelspindel 21 wirkt die Ruhestrombremse 12, die vorzugsweise als Ruhestrommagnetbremse ausgebildet ist. Diese fällt also stets dann ein, wenn der Strom für den Elektromotor abgeschaltet wird. Da jedoch Kugelspindeltriebe nicht selbsthemmend sind, ist es günstiger, wenn die Ruhestrombremse 12 bereits kurzzeitig vor dem Abschalten des Elektromotors 6 einfällt. Dies geschieht durch ein nicht dargestelltes Zeitglied, das beim Abschalten des Motorstromes zunächst die Ruhestrombremse 12 stromlos macht und erst nach Ablauf eines vorbestimmten Zeitfaktors den E-Motor 6 abschaltet. Dadurch wird auf alle Fälle ein Nachlassen eines kraftschlüssigen Spannvorgangs verhindert. Nur durch Öffnen der Bremse oder über die Betätigung der Kugelspindel 21 in entgegengesetzter Drehrichtung kann ein Öffnen der Spannbackenhebel 26 bewirkt werden.

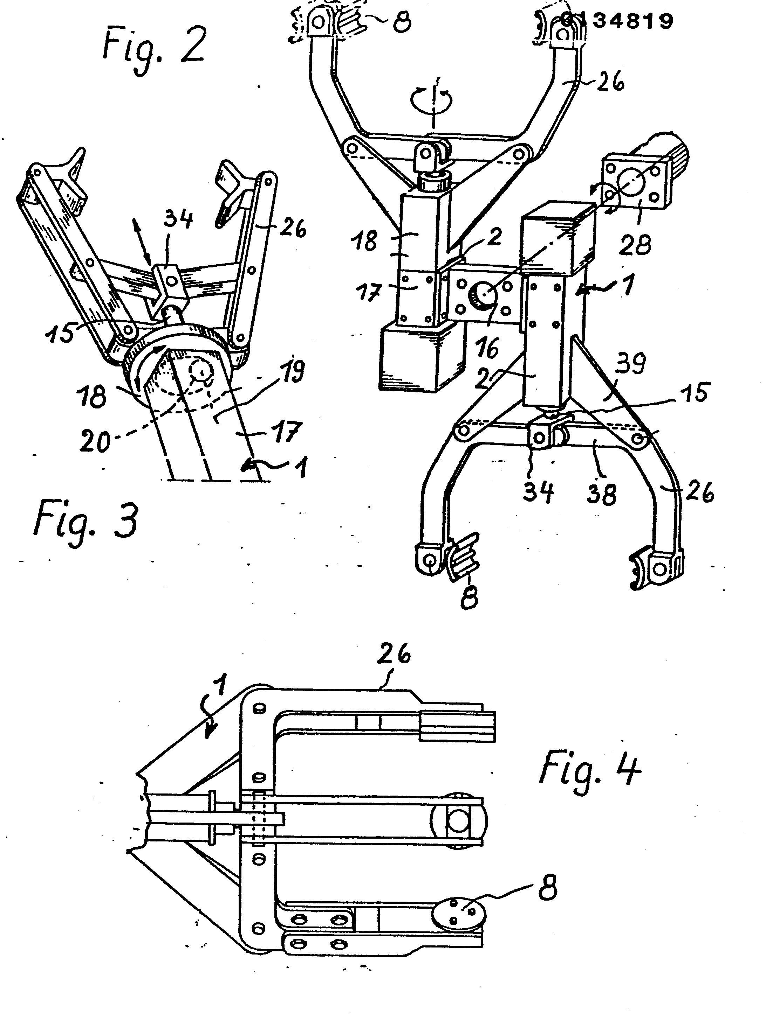

Wie die Figur 2 zeigt, können mehrere Spannzangen 1 entgegengerichtet an einem Trägerteil 16 so angeordnet sein, daß sich die Spannantriebe 2 bei achsparalleler Anordnung überlappen. Die Öffnungen der Spannzangen zeigen dann in entgegengesetzte Richtungen und durch die Überlappung wird der erforderliche Raum zwischen den Werkstücken verringert. Der Träger 16 kann beispielsweise mit der Anschlußplatte 28' eines nicht dargestellten Schwenkwerkes verschraubt sein.

Die Spannbacken 8 sind nach innen gerichtet, können aber, wie strichpunktiert dargestellt, auch nach außen gerichtet sein.

Wie ein Ringpfeil um die Mittelachse der in der Zeichnung oberen Spannzange zeigt, können die Spannbackenhebel 26 um ihre Symmetrieachse verdreht werden, um die Schließrichtung zu ändern. Dazu kann beispielsweise der Spannantrieb 2 quergeteilt sein, so daß sich ein Rotationsteil 18 gegenüber dem Vierkantrohr 17 als Basisteil verdrehen kann. Diese Anordnung eignet sich besonders für die gleichzeitige Handhabung von Fertigteilen und Rohteilen für Bearbeitungsmaschinen.

In geringfügig anderer Anordnung zeigt die Zeichnung nach Figur 3 ein gegenüber dem Vierkantrohr 17 verdrehbares Rotationsteil 18, das über ein Antriebsritzel 20 von einer zur Spindel parallelen Welle 19 drehbar angetrieben ist.

Das Hebelgetriebe 7, das die Spannbacken 8 trägt, kann
auch, wie bei Figur 4 gezeigt, drei konzentrisch wirkende
Spannbackenhebel aufweisen.

Das Hebelgetriebe 7 ist über Gelenke 38 an Auslegerarmen
39 befestigt, die mit dem Vierkantrohr 17 verschweißt sind.

0134819

Positionszahlenliste

| | | | |
|---|---|---|---|
| 1 | Spannzange | 36 | Langlöcher |
| 2 | Spannantrieb | 37 | Schenkel |
| 3 | Spindel | 38 | Gelenke |
| 4 | Mutter | 39 | Auslegerarme |
| 5 | Schraubengetriebe | | |
| 6 | Elektromotor | | |
| 7 | Hebelgetriebe | | |
| 8 | Spannbacken | | |
| 9 | Stößel | | |
| 10 | Kraftspeicher | | |
| 11 | Tellerfederpakete | | |
| 12 | Ruhestrombremse | | |
| 13 | Ende des Stößels 9 | | |
| 14 | Baueinheit | | |
| 15 | Anschlußteil | | |
| 16 | Trägerteil | | |
| 17 | Vierkantrohr | | |
| 18 | Rotationsteil | | |
| 19 | parallele Welle | | |
| 20 | Antriebsritzel | | |
| 21 | Kugelspindel | | |
| 22 | Kugelumlaufmutter | | |
| 23 | Rotationsdämpfung | | |
| 24 | Haltezapfen | | |
| 25 | Kugellager | | |
| 26 | Spannbackenhebel | | |
| 27 | Werkstück | | |
| 28 | Anschlußplatte | | |
| X | Spannwege | | |
| 31 | Gewinde | | |
| 32 | Ringflansch | | |
| 33 | Deckelteil | | |
| 34 | Gelenkgabel | | |
| 35 | Achse | | |

0134819

Patentansprüche

1. Spannzange (1) mit elektromotorischem Spannantrieb (2), bei der die Spindel (3) oder Mutter (4) eines Schraubengetriebes (5) zur Erzeugung einer axialen Spannbewegung über einen Elektromotor (6) drehend angetrieben ist und die so erzeugte Axialbewegung durch ein Hebelgetriebe (7) in Bewegungen von Spannbacken (8) rechtwinklig dazu umwandelbar ist, dadurch gekennzeichnet, daß zwischen dem die Axialkräfte übertragenden Teil (Stößel 9) des Schraubengetriebes (5) und dem Hebelgetriebe (7) mehrere einander entgegengerichtet vorgespannte, auch als Dämpfung dienende, Kraftspeicher (10) eingeschaltet sind.

2. Spannzange nach Anspruch 1, dadurch gekennzeichnet, daß die Kraftspeicher (10) Tellerfederpakete (11) sind.

3. Spannzange nach Anspruch 1 oder 2, dadurch gekennzeichnet, daß die angetriebene Spindel (3) bzw. die Läuferwelle des Elektromotors (6) mit einer Ruhestrombremse (12), vorzugsweise Ruhestrommagnetbremse, gekoppelt ist.

4. Spannzange nach einem oder mehreren der Ansprüche 1 bis 3, dadurch gekennzeichnet, daß eine in oder an das Ende (13) des Stößels (9) anschließbare, auswechselbare Baueinheit (14) die gegeneinander vorgespannten Kraftspeicher (10) enthält, zwischen denen ein Anschlußteil (15) eingespannt ist, das die Axialkräfte (siehe Pfeil) auf das Hebelgetriebe (7) überträgt.

5. Spannzange nach einem oder mehreren der Ansprüche 2
bis 4, dadurch gekennzeichnet, daß sich die Spannantriebe (2) zweier entgegengerichteter Spannzangen (1) bei achsparalleler Anordnung an einem schwenkbaren Trägerteil (16) überlappen.

6. Spannzange nach einem oder mehreren der Ansprüche 1
bis 5, dadurch gekennzeichnet, daß die Spannantriebe (2) quergeteilt und die Teile
(Vierkantrohr 17 und Rotationsteil 18) um eine gemeinsame Achse gegeneinander drehbar sind.

7. Spannzange nach einem oder mehreren der Ansprüche 1
bis 6, dadurch gekennzeichnet, daß als Elektromotoren (6) Niederspannungsmotore
von 40 bis 60 V dienen.

8. Spannzange nach einem oder mehreren der Ansprüche 1
bis 7, dadurch gekennzeichnet, daß der die Spindel (3) antreibende Elektromotor (6)
über diese direkt oder über eine parallele Welle (19)
das Antriebsritzel (20) eines Schwenkwerkes für
gegeneinander verdrehbare Teile (17, 18) des Spanantriebes (2) antreibt.

9. Spannzange nach einem oder mehreren der Ansprüche 1
bis 8, dadurch gekennzeichnet, daß der Spannantrieb (2) eine Kugelspindel (21) mit
Kugelumlaufmutter (22) und Rotationsdämpfung (23)
enthält.

0134819

10. Spannzange nach einem oder mehreren der Ansprüche 1 bis 9,

dadurch gekennzeichnet, daß die Spannbacken (8) mit oder um ihre Haltezapfen (24) auf Kugellagern (25) drehbar gelagert sowie gegenüber ihren Spannbackenhebeln (26) um 180° schwenkbar und/oder umsteckbar sind, derart, daß sie nach innen oder außen spannen.

11. Verfahren zum kraft- und/oder formschlüssigen Spannen von Werkstücken mit Spannzangen unter Verwendung von Vorrichtungen nach einem oder mehreren der Ansprüche 1 bis 9, dadurch gekennzeichnet, daß ein drehend angetriebenes Teil (Spindel 3 oder Mutter 4) des Schraubengetriebes (5) zunächst das axial bewegte andere Teil bis zur Anlage der Spannbacken (8) am Werkstück (27) bewegt und dann unter Überwindung des Werkstück- und/oder Spannbackenverformungsweges sowie unter Spannung des oder der Kraftspeicher (10) einen weiteren axialen Weg bis zur Erreichung eines durch die Regelung des Drehmomentes des Elektromotores (6) bestimmten Anlagekraft ausführt und daß nach Erreichen dieser Anlagekraft eine Bremse (Ruhestrombremse 6) einfällt, so daß die Position der Kugelspindel (21) auch ohne Motordrehmoment unter Beibehaltung der vollen Spannkraft aufrecht erhalten wird.

12. Verfahren nach Anspruch 10, dadurch gekennzeichnet, daß beim Abschalten des Stromes zunächst der Strom der Ruhestrombremse (12) abgeschaltet wird und über ein Zeitglied die Abschaltung des Motorstromes verzögert erfolgt.

0134819

13. Verfahren nach Anspruch 11 und/oder 12,
dadurch gekennzeichnet,
daß der Spannweg (26) des Anschlußteiles (15) gegen
die Kraftspeicher (10) von einem Sensor erfaßt und
von diesem als Information zur Regelung des Motordrehmomentes dienend, weitergegeben wird.

Fig. 1

**Fig. 2**

**Fig. 3**

**Fig. 4**

Europäisches
Patentamt

**EUROPÄISCHER RECHERCHENBERICHT**

**0134819**

Nummer der Anmeldung

EP 81 10 9672

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | US - A - 2 861 700 (JAMES) | |
| | * Spalte 7, Zeilen 11 bis 41 * | 1,2,11 |
| | -- | |
| Y | DE - A - 1 652 869 (GOTZ) | |
| | * Seite 10, Zeile 21 bis Seite 11, Zeile 7 * | 1 |
| | -- | |
| A | DE - B - 1 531 162 (THE BUDD Co.) | |
| A | GB - A - 643 863 (BENDIX AVIATION CORP.) | |
| A | DE - A - 2 327 387 (PFAFF) | |
| A | DE - A - 2 430 462 (I.B.M.) | |
| | * Seite 13, Zeilen 28 bis 32 * | |

----------

**KLASSIFIKATION DER ANMELDUNG (Int Cl ³)**

B 25 J 15/02

**RECHERCHIERTE SACHGEBIETE (Int. Cl.³)**

B 25 J
B 66 C
B 23 Q

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 12-03-1982 | LAMMINEUR |

EPA form 1503.1 06.78